(19) Europäisches Patentamt
European Patent Office
Office européen des brevets

(11) **EP 2 677 573 A1**

(12) **EUROPEAN PATENT APPLICATION**
published in accordance with Art. 153(4) EPC

(43) Date of publication:
**25.12.2013 Bulletin 2013/52**

(21) Application number: **12746560.7**

(22) Date of filing: **31.01.2012**

(51) Int Cl.:
***H01M 4/139*** *(2010.01)*  ***H01M 4/13*** *(2010.01)*
***H01M 4/62*** *(2006.01)*

(86) International application number:
**PCT/JP2012/052156**

(87) International publication number:
**WO 2012/111425 (23.08.2012 Gazette 2012/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.02.2011 JP 2011028216**

(71) Applicant: **SHOWA DENKO K.K.**
**Tokyo 105-8518 (JP)**

(72) Inventors:
• **HANASAKI Mitsuru**
**Tatsuno-shi, Hyogo 679-4155 (JP)**
• **FUKASE Kazunari**
**Tatsuno-shi, Hyogo 679-4155 (JP)**
• **ITO Daigo**
**Tatsuno-shi, Hyogo 679-4155 (JP)**

(74) Representative: **Strehl Schübel-Hopf & Partner**
**Maximilianstrasse 54**
**80538 München (DE)**

(54) **SLURRIES OBTAINED USING BINDER FOR CELL ELECTRODES, ELECTRODES OBTAINED USING SLURRIES, AND LITHIUM-ION SECONDARY CELL OBTAINED USING ELECTRODES**

(57) Provided is a slurry for lithium ion secondary battery electrodes, which has proper binding properties between active materials and between an active material and a current collector, an electrode using the slurry, and a lithium ion secondary battery using the electrode and having both a high initial discharge capacity and an excellent charge-discharge high-temperature cycle characteristic. The present invention relates to a slurry for lithium ion secondary battery electrodes, which is obtained using a binder for battery electrodes and an active material and has a pH of 3.0 to 6.0. Preferably, the slurry contains a binder for battery electrodes in an amount of 0.2 to 4.0% by mass based on the active material.

EP 2 677 573 A1

**Description**

TECHNICAL FIELD

The present invention relates to a slurry for lithium ion secondary battery electrodes, which is obtained using a binder for battery electrodes and an active material, wherein pH of the slurry is 3.0 to 6.0, an electrode for lithium ion secondary batteries using the slurry, and a lithium ion secondary battery using the electrode.

BACKGROUND ART

The market of lithium ion secondary batteries has been expanded as use of notebook personal computers, mobile phones, electric power tools and electronic/communication devices become widespread. Further, recently, demands for lithium ion secondary batteries for electric cars and hybrid cars have been increased due to environmental issues, and particularly for these applications, a lithium ion secondary battery, the power, capacity and energy density of which are enhanced, is required.

Generally, the lithium ion secondary battery is composed of a positive electrode having a metal oxide such as lithium cobaltate as an active material, a negative electrode having a carbon material such as graphite as an active material, a separator which is a porous sheet of polypropylene, polyethylene or the like, and an electrolytic solution formed by dissolving an electrolyte such as lithium hexafluorophosphate ($LiPF_6$) in a carbonate-based solvent. For details of each electrode, the positive electrode is obtained by applying a slurry for lithium ion secondary battery positive electrodes, which includes a metal oxide and a binder, to an aluminum foil or the like to form a positive electrode layer, and the negative electrode is obtained by applying a slurry for lithium ion secondary battery negative electrodes, which includes graphite and a binder, to a copper foil or the like to form a negative electrode layer.

Generally, when a slurry for lithium secondary battery electrodes is applied to a copper foil, an aluminum foil or the like to produce an electrode for lithium ion secondary batteries, examples of the binder of the slurry for lithium secondary battery electrodes include polyvinylidene fluoride (PVDF) using N-methylolpyrrolidone (NMP) of an organic solvent type as a solvent, and a styrene-butadiene rubber (SBR) using carboxymethyl cellulose (CMC) in combination as a thickener.

PVDF-based binders which have been used heretofore as binders of the slurry for lithium secondary battery electrodes (see, for example, Patent Literature 1) have the disadvantage that the binding properties between active materials and between an active material and a current collector are low, and a large amount of the binder is required for practical use, resulting in a reduction in capacity of the lithium ion secondary battery.

SBR-based binders have been used in a wide range of applications as aqueous binders for lithium ion secondary battery electrodes because active materials, and an active material and a current collector can be properly bound (see, for example, Patent Literature 2). However, a slurry in which the amount of a binder used is reduced for realizing capacity enhancement of a battery has the problem that active materials, and an active material and a current collector cannot be properly bound, and therefore the charge-discharge cycle characteristic of the lithium ion secondary battery is deteriorated.

CITATION LIST

PATENT LITERATURE

Patent Literature 1: JP 3966570B
Patent Literature 2: JP 3562197B

SUMMARY OF INVENTION

TECHNICAL PROBLEM

An object of the present invention is to provide a slurry for lithium ion secondary battery electrodes, which has proper binding properties between active materials and between an active material and a current collector, an electrode using the slurry, and a lithium ion secondary battery using the electrode and having both a high initial discharge capacity and an excellent charge-discharge high-temperature cycle characteristic.

SOLUTION TO PROBLEM

The present inventors have constantly conducted intensive studies, and resultantly found that by using a slurry for lithium ion secondary battery electrodes, which has a pH in a specific range, active materials, and an active material and a current collector can be properly bound, and by using the slurry, a lithium ion secondary battery having both a high initial discharge capacity and an excellent charge-discharge high-temperature cycle characteristic can be obtained, thus leading to completion of the present invention.

That is, the present invention relates to a slurry for lithium ion secondary battery electrodes, which is obtained using a binder for battery electrodes and an active material and has a pH of 3.0 to 6.0.

Preferably, the slurry for lithium ion secondary battery electrodes according to the present invention contains the binder for battery electrodes in an amount of 0.2 to 4.0% by mass based on the active material.

Preferably, the binder for battery electrodes is obtained by polymerizing an ethylenically unsaturated monomer.

Preferably, the binder for battery electrodes is obtained by emulsion-polymerizing the ethylenically unsaturated monomer.

Preferably, the binder for battery electrodes is obtained by polymerizing styrene, an ethylenically unsaturated carboxylic acid ester and an ethylenically unsaturated carboxylic acid, and contains a crosslinker.

Preferably, the acid value of the binder for battery electrodes is 5.0 to 30.0 mgKOH/g.

Preferably, pH of the binder for battery electrodes in a state of being dissolved or dispersed in a liquid containing water is 2.0 to 5.0.

Preferably, the slurry for lithium ion secondary battery electrodes further contains carboxymethyl cellulose.

The present invention relates to an electrode for lithium ion secondary batteries, which is obtained using the slurry for lithium ion secondary battery electrodes.

The present invention relates to a lithium ion secondary battery which is obtained using the electrode for lithium ion secondary batteries.

The present invention relates to a method for producing an electrode for lithium ion secondary batteries, wherein pH of a slurry for lithium ion secondary battery electrodes, which is obtained using a binder for battery electrodes and an active material, is adjusted to 3.0 to 6.0, and an electrode for lithium ion secondary batteries is produced using the obtained slurry for lithium ion secondary battery electrodes.

The present invention relates to a method for producing a lithium ion secondary battery, wherein a lithium ion secondary battery is produced using the electrode for lithium ion secondary batteries.

ADVANTAGEOUS EFFECTS ON INVENTION

According to the present invention, by using a slurry for lithium ion secondary battery electrodes, which has a pH of 3.0 to 6.0, active materials, and an active material and a current collector can be properly bound, and by using the slurry, a lithium ion secondary battery having both a high initial discharge capacity and an excellent charge-discharge high-temperature cycle characteristic can be provided.

DESCRIPTION OF EMBODIMENTS

Components that constitute the present invention will be described in detail below.

In the present invention, a slurry for lithium ion secondary battery electrodes, which is obtained using a binder for battery electrodes and an active material, wherein pH of the slurry is 3.0 to 6.0, is used. By adjusting pH of the slurry to 3.0 to 6.0, binding properties among a current collector, an active material, and a current collector can be improved. pH of the slurry for battery electrodes is adjusted to preferably 3.5 to 5.5, more preferably 4.0 to 5.5. When pH of the slurry for battery electrodes is less than 3.0, it may be difficult to prepare the slurry, and when pH of the slurry is more than 6.0, binding properties between active materials and between an active material and a current collector may be deteriorated.

The slurry for lithium ion secondary battery electrodes, which is used in the present invention, has the binder for a lithium ion secondary battery electrode and an active material which are dispersed or dissolved in water, or a mixture of water with a highly hydrophilic solvent. Examples of the method for preparation of the slurry include a method in which the binder for lithium ion secondary battery electrodes is dispersed, dissolved or mixed in a solvent, other additives and an active material are then added, and the mixture is further dispersed, dissolved or mixed.

A thickener and a viscosity modifier can be compounded with the slurry for lithium ion secondary battery electrodes, which is used in the present invention, as long as the effect of the present invention is not impaired. The thickener and viscosity modifier are compounded in an amount of preferably 0.2 to 3.0% by mass, further preferably 0.5 to 2.0% by mass in the slurry for lithium ion secondary battery electrodes. Examples of the thickener and viscosity modifier that are compounded with the slurry for lithium ion secondary battery electrodes include cellulose derivatives such as carboxymethyl cellulose, carboxyethyl cellulose, ethyl cellulose, hydroxymethyl cellulose, hydroxypropyl cellulose and carboxyethylmethyl cellulose (including salts such as ammonium salts and alkali metal salts thereof), and it is preferred to compound carboxymethyl cellulose for imparting moderate viscosity to the slurry.

A water-soluble polymer, a surfactant and the like can also be compounded with the slurry for lithium ion secondary battery electrodes, which is used in the present invention, for the purpose of improving stability of the slurry. Examples of the water-soluble polymer that is compounded with the slurry for lithium ion secondary battery electrodes may include polyethylene oxide, ethylene glycol and polycarboxylic acid.

The slurry for lithium ion secondary battery electrodes, which is used in the present invention, is preferably a slurry for battery electrodes the pH of which is adjusted with at least one compound selected from the group consisting of an organic acid, an inorganic acid, an organic base and an inorganic base.

Examples of the organic acid as a compound for adjusting pH of the slurry for lithium ion secondary battery electrodes, which is used in the present invention, include acrylic acid, methacrylic acid, itaconic acid, formic acid, acetic acid, oxalic acid, malonic acid, succinic acid, glutaric acid, adipic acid, pimelic acid, suberic acid, azelaic acid, sebacic acid, phthalic acid, fumaric acid, citric acid and 1,2,3,4-butanetetracarboxylic acid. Examples of the inorganic acid include hydrochloric acid, sulfuric acid, nitric acid, phosphoric acid, boric acid, carbonic acid, perchloric acid and sulfamic acid. Examples of the organic base include primary amines $R^1NH_2$, secondary amines $R^1R^2NH$, tertiary amines $R^1R^2R^3N$ and quaternary ammonium salts $R^1R^2R^3R^4N^+$. Here, $R^1$, $R^2$, $R^3$ and $R^4$ may be the same or different, and each represent an alkyl group having 1 to 10 carbon atoms, a phenyl group, a hexyl group or a group resulting from  binding of these groups. $R^1$, $R^2$, $R^3$ and $R^4$ may further have a substituent. Examples of the inorganic base include ammonia, lithium hydroxide, potassium hydroxide, sodium hydroxide and calcium hydroxide. These compounds may be used alone or may be used in combination of two or more thereof as long as the effect of the present invention is not impaired. As a pH adjusting compound for lowering pH of the slurry for lithium ion secondary battery electrodes, formic acid is preferred because binding properties among a current collector, an active material, and a current collector can be further improved, and as a pH adjusting compound for raising pH, ammonia is preferred because a base is hard to remain on the electrode after drying.

Preferably, the slurry for lithium ion secondary battery electrodes according to the present invention contains a binder for battery electrodes in an amount of 0.2 to 4.0% by mass based on the active material. When the content of the binder for electrodes is 0.2 to 3.0% by mass based on the active material, there can be provided a slurry for lithium ion secondary battery electrodes, which has proper binding properties between active materials and between an active material and a current collector, and a lithium ion secondary battery having both a high initial discharge capacity and an excellent charge-discharge high-temperature cycle characteristic. The content of the binder for battery electrodes is preferably 0.2 to 3.0% by mass, more preferably 0.5 to 2.5% by mass based on the active material. When the amount of the binder used is less than 0.2% by mass, the binding property between an active material and a current collector may be deteriorated, and when the amount of the binder used is more than 3.0% by mass, the initial  discharge capacity of the lithium ion secondary battery may be reduced.

As the binder for battery electrodes, known polymers such as a styrene-butadiene rubber can be used besides polymers obtained by polymerizing an ethylenically unsaturated monomer. At least one monomer selected from the group consisting of ethylenically unsaturated monomers is not particularly limited, and examples thereof include (meth) acrylic acid esters having a linear, branched or cyclic alkyl chain; aromatic vinyl compounds such as styrene and α-methylstyrene; hydroxyalkyl (meth)acrylates; alkylamino (meth)acrylates; vinyl esters exemplified by vinyl acetate and vinyl alkanoate; monoolefins (ethylene, propylene, butylene, isobutylene, etc.); diolefins (allene, methyl allene, butadiene); α,β-unsaturated mono- or dicarboxylic acids (acrylic acid, methacrylic acid, crotonic acid, itaconic acid, maleic acid, fumaric acid, etc.); carbonyl group-containing ethylenically unsaturated monomers such as diacetone acrylamide; and sulfonic acid group-containing ethylenically unsaturated monomers such as p-toluenesulfonic acid. These ethylenically unsaturated monomers may be used alone or may be used in combination of two or more thereof. Among them, the binder for lithium ion secondary battery electrodes, which is obtained using these ethylenically unsaturated monomers, is preferably a styrene-(meth)acrylic acid ester copolymer or a (meth)acrylic acid ester copolymer from the viewpoint of further improving resistance to elution into an electrolytic solution for the purpose of improving battery characteristics. Preferably, in particular, the binder is obtained by copolymerizing styrene, an ethylenically unsaturated carboxylic acid ester and an ethylenically unsaturated carboxylic acid.

When a binder for battery electrodes, which is obtained by copolymerizing styrene, an ethylenically unsaturated carboxylic acid ester and an ethylenically unsaturated carboxylic acid, is used, the content of styrene units in the binder for battery electrodes is preferably 15 to 70% by mass, further preferably 30 to 60% by mass. When the content of styrene units in the binder for battery electrodes is less than 15% by mass, binding between active materials may be poor, and adhesive strength between an active material and current collector may be reduced, and when the content of styrene units is more than 70% by mass, an electrode obtained by applying a slurry containing an active material may be cracked. When a binder for battery electrodes, which is obtained by copolymerizing styrene, an ethylenically unsaturated carboxylic acid ester and an ethylenically unsaturated carboxylic acid, is used, the content of the ethylenically unsaturated carboxylic acid ester in the binder for battery electrodes is preferably 25 to 85% by mass, further preferably 30 to 80% by mass. When the content of ethylenically unsaturated monomer units in the binder for battery electrodes is less than 25% by mass, flexibility and heat resistance of the electrode obtained may be deteriorated, and when the content of ethylenically unsaturated monomer units is more than 85% by mass, binding properties between active materials and between an active material and a current collector may be deteriorated. When a binder for battery electrodes, which is obtained by copolymerizing styrene, an ethylenically unsaturated carboxylic acid ester and an ethylenically unsaturated carboxylic acid, is used, the content of the ethylenically unsaturated carboxylic acid in the binder for battery electrodes is preferably 1 to 10% by mass, further preferably 1 to 5% by mass. When the content of the ethylenically unsaturated carboxylic acid in the binder for battery electrodes is less than 1% by mass, emulsion polymerization stability or mechanical stability may be deteriorated, and when the content of the ethylenically unsaturated carboxylic acid is more than 10% by mass, binding properties between active materials and between an active material and a current collector may be deteriorated.

A monomer serving as a crosslinker, such as an epoxy group-containing $\alpha,\beta$-ethylenically unsaturated compound such as glycidyl (meth)acrylate, a hydrolyzable alkoxysilyl group-containing $\alpha,\beta$-ethylenically unsaturated compound such as vinyltriethoxysilane or $\gamma$-methacryloxypropyl trimethoxy silane, or polyfunctional vinyl compound (ethylene glycol di(meth)acrylate, trimethylolpropane tri(meth)acrylate, allyl (meth)acrylate, divinylbenzene, diallylphthalate, etc.) may be introduced into a copolymer used as a binder for battery electrodes, and crosslinked with itself, or crosslinked in combination with a ethylenically unsaturated compound component having an active hydrogen group, or a carbonyl group-containing $\alpha,\beta$-ethylenically unsaturated compound (exclusively one containing a keto group in particular) or the like may be introduced into a copolymer, and crosslinked in combination with a polyhydrazine compound (particularly a compound having two or more hydrazide groups; dihydrazide oxalate, dihydrazide succinate, dihydrazide adipate, polyacrylic acid hydrazide, etc.) as required. By introducing a crosslinker into a copolymer as described above, battery characteristics can be improved. The amount of the crosslinker added to the binder for battery electrodes is preferably 0.1 to 5% by mass, further preferably 0.1 to 3% by mass based on the binder for battery electrodes. When the amount of the crosslinker added to the binder for battery electrodes is less than 0.1% by mass based on the binder for battery electrodes, swelling resistance of a dry film to an electrolytic solution may be deteriorated, and when the amount of crosslinker is more than 5% by mass, emulsion polymerization stability may be deteriorated, and adhesive strength between an active material and a current collector may be reduced.

As a method for polymerizing a monomer for obtaining a polymer that is used for the binder for battery electrodes, previously known methods may be used, and preferably an emulsion polymerization method is used. As a surfactant that is used in emulsion polymerization, a usual anionic surfactant or non-ionic surfactant is used. Examples of the anionic surfactant include alkylbenzene sulfonates, alkyl sulfate esters, polyoxyethylene alkyl ether sulfate esters and fatty acid salts, and examples of the non-ionic surfactant include polyoxyethylene alkyl ethers, polyoxyethylene alkyl phenyl ethers, polyoxyethylene polycyclic phinyl ethers, polyoxyalkylene alkyl ethers, sorbitan fatty acid esters and polyoxyethylene sorbitan fatty acid asters. These surfactants may be used alone or may be used in combination of two or more thereof.

The amount of the surfactant used is preferably 0.3 to 3% by mass based on total ethylenically unsaturated monomers. When the amount of the surfactant used is less than 0.3% by mass, emulsion polymerization may be difficult, or polymerization stability may be deteriorated even if emulsion polymerization is possible, and the particle diameter of an aqueous emulsion increases, so that sedimentation of a resin emulsion easily occurs. When the amount of the surfactant used is more than 3% by mass, adhesive strength between an active material and a current collector may be reduced.

The radical polymerization initiator that is used in emulsion polymerization may be one that is known and usually used, and examples thereof include ammonium persulfate, potassium persulfate, hydrogen peroxide and t-butyl hydroperoxide. If needed, the polymerization initiators described above may be used in combination with a reducing agent such as sodium bisulfite, rongalite or ascorbic acid to perform redox polymerization.

As a method for emulsion polymerization of an aqueous emulsion in the present invention, a polymerization method in which components are put in all together, a method in which polymerization is performed while components are continuously fed, or the like is applied. Usually, polymerization is performed under stirring at a temperature of 30 to 90°C. By adjusting pH by adding a basic substance during or after polymerization of an ethylenically unsaturated carboxylic acid copolymerized in the present invention, polymerization stability during emulsion polymerization, mechanical stability and chemical stability can be improved.

The basic substance that is used in this case may be ammonia, triethylamine, ethanolamine, caustic soda and the like. These surfactants may be used alone or may be used in combination of two or more thereof.

For example, pH of the binder for battery electrodes in a state of being dissolved or dispersed in a liquid containing water, like an aqueous emulsion obtained by emulsion polymerization of an ethylenically unsaturated monomer or a styrene-butadiene rubber latex, is preferably 2.0 to 5.0. When pH of the binder for battery electrodes is less than 2.0, agglomerates may be easily generated in formation of a slurry. When pH of the binder is more than 5.0, pH of the lithium ion secondary battery electrode slurry immediately after mixing may be higher than 6.0. However, even when pH of the lithium ion secondary battery electrode slurry is higher than 6.0, the slurry can be used by lowering pH using a pH adjusting compound. When pH is less than 5.0, there is the advantage that use of a pH adjusting compound is not necessary.

Preferably, the acid value of the binder for battery electrodes is 5.0 to 30.0 mgKOH/g, further preferably 5.0 to 25.0 mgKOH/g. When the acid value of the binder for battery electrodes is less than 5.0 mgKOH/g, binding properties between active materials and between an active material and a current collector may be deteriorated, and when the acid value of the binder for battery electrodes is more than 30.0 mgKOH/g, binding properties between active materials and between an active material and a current collector may be deteriorated. The acid value of the composition is a value measured in accordance with JIS K0070. For example, the acid value is measured in the following manner.

About 2 g of a sample is precisely weighed in a 100 ml Erlenmeyer flask using a precision balance, and 10 ml of a mixed solvent of ethanol/diethyl ether = 1/1 (mass ratio) is added thereto to dissolve the sample. Further, to the container are added 1 to 3 drops of a phenolphthalein ethanol solution as an indicator, and stirring is performed sufficiently until the sample becomes heterogeneous. This is titrated with a 0.1 N potassium hydroxide-ethanol solution, and the time when the light red color of the indicator is maintained for 30 seconds is considered as an end point of neutralization. A value obtained from the result using the following calculation formula (1) is defined as an acid value of the composition. Math. 1

$$\text{Acid value (mgKOH/g)} = [B \times f \times 5.611]/S \qquad (1)$$

B : amount of 0.1 N potassium hydroxide - ethanol solution used (ml)
f : factor of 0.1 N potassium hydroxide - ethanol solution
S : amount of sample taken (g)

The slurry for lithium ion secondary battery electrodes according to the present invention can be used for either a positive electrode or a negative electrode.

The positive electrode active material is not particularly limited as long as it can be used for a lithium ion secondary battery, and one of lithium cobaltate ($LiCoO_2$), lithium composite oxides including nickel, such as a Ni-Co-Mn-based lithium composite oxide, a Ni-Mn-Al-based lithium composite oxide and a Ni-Co-Al-based lithium composite oxide, spinel-type lithium manganate ($LiMn_2O_4$), olivine-type lithium iron phosphate, and chalcogen compounds such as $TiS_2$, $MnO_2$, $MoO_3$ and $V_2O_5$ is used, or two or more thereof are used in combination.

The negative electrode active material may be any carbonaceous material that intercalates lithium ions, and for example, one of graphite, carbon fibers, cokes such as coke, petroleum coke, pitch coke and coal coke, polymer coal, carbon fibers, carbon blacks such as acetylene black and ketjen black, pyrolytic carbons, glassy carbon, organic polymer material sintered bodies formed by sintering an organic polymer material in vacuum or in an inert gas at 500°C or higher, carbonaceous fibers, and the like is used, or two or more thereof are used in combination.

The electrode of the present invention is produced by applying a slurry for lithium ion secondary battery electrodes onto a current collector, and drying the slurry. As a method for applying the slurry of the present invention, a general method can be used, and examples thereof may include a reverse roll method, a direct roll method, a doctor blade method, a knife method, an extrusion method, a curtain method, a gravure method, a bar method, a dip method and a squeeze method.

The slurry for lithium ion secondary battery electrodes may be applied to one surface or both surfaces of the current collector, and when the slurry is applied to both surfaces of the current collector, it may be sequentially applied to one surface after another, or may be applied to both surfaces at the same time. The slurry may be applied to the surface of the current collector continuously or intermittently. The thickness, length and width of the applied layer can be appropriately determined according to a battery size.

As a method for drying the slurry of the present invention, a general method can be used. Preferably, in particular, hot air, vacuum, infrared rays, far infrared rays, electron beams and low-temperature air are used alone or in combination. The drying temperature is preferably in a range of 80 to 350°C, especially preferably in a range of 100 to 250°C.

The current collector that is used for production of the electrode of the present invention is not particularly limited as long as it is made of a metal such as iron, copper, aluminum, nickel or stainless. The shape of the current collector is not particularly limited, but usually a sheet-shaped current collector having a thickness of 0.001 to 0.5 mm is preferably used. The electrode of the present invention can be pressed if needed. As a pressing method, a general method can be used, but particularly a mold pressing method and a calender pressing method are preferred. The pressing pressure is not particularly limited, but is preferably 0.2 to 10 t/cm$^2$.

The battery of the present invention is produced in accordance with a known method using the positive electrode and/or negative electrode of the present invention, an electrolytic solution and components such as a separator. For the electrode, a laminated or a wound body can be used. As an exterior body, a metallic exterior body or an aluminum laminate exterior body can be appropriately used. The shape of the battery may be any of a coin shape, a button shape, a sheet shape, a cylindrical shape, a rectangular shape, a flat shape and so on.

As an electrolyte in the electrolytic solution of the battery, any of known lithium salts can be used, and a selection may be made according to a type of the active material. Examples thereof include $LiClO_4$, $LiBF_6$, $LiPF_6$, $LiCF_3SO_3$, $LiCF_3CO_2$, $LiAsF_6$, $LiSbF_6$, $LiB_{10}Cl_{10}$, $LiAlCl_4$, $LiCl$, $LiBr$, $LiB(C_2H_5)_4$, $CF_3SO_3Li$, $CH_3SO_3Li$, $LiCF_3SO_3$, $LiC_4F_9SO_3$, $Li(CF_3SO_2)_2N$ and fatty acid lithium carboxylate.

The solvent for dissolving an electrolyte is not particularly limited as long as it is a solvent that is usually used as a liquid for dissolving an electrolyte, and ethylene carbonate (EC), propylene carbonate (PC), diethyl carbonate (DEC), methylethyl carbonate (MEC), dimethyl carbonate (DMC) or the like can be used. Preferably, a cyclic carbonate and a chain carbonate are used in combination. These solvents may be used alone or may be used in combination of two or more thereof.

EXAMPLES

The present invention will be described further in detail below by showing Examples and Comparative Examples, but the present invention is not limited thereto. "Part(s)" and "%" in Examples and Comparative Examples refer to part (s) by mass and % by mass, respectively, unless otherwise specified. Performance evaluation tests for a slurry for lithium ion secondary battery electrodes, an electrode for lithium ion secondary batteries obtained using the slurry, and a lithium ion secondary battery obtained using the electrode, which were obtained in each of Examples and Comparative examples, were conducted in accordance with the following method.

(Measurement of pH)

pH of the slurry for lithium ion secondary battery electrodes was measured at 1 atm and 23°C using a pH meter (manufactured by DKK-TOA CORPORATION, trade name: HM-30G).

(Current Collector Peel Strength Test)

A slurry for negative electrodes, which was obtained as described below, was applied to a copper foil as a current collector at a rate of 150 $\mu$m/m$^2$ in a wet state, dried by heating at 50°C for 5 minutes, subsequently dried by heating at 110°C for 5 minutes, and then left standing at 23°C and 50% RH for 24 hours to prepare a test piece. For the peel strength test, the applied surface of the test piece and a SUS plate were bonded together using a double sided tape, and a 180° peel strength test was conducted (peel width 25 mm, peel rate 100 mm/min). The unit of the peel strength is mN/mm, and a peel strength of 50 mN/mm or more is considered "good". Measurements of the peel strength were performed using RTA-100 manufactured by ORIENTEC Co., Ltd.

(Initial Charge-Discharge Efficiency)

An initial charge-discharge efficiency was determined as follows: CC-CV charge (performing charge at a constant current (0.2 A) until an upper limit voltage (4.2 V) was reached, followed by performing charge at a constant voltage (4.2 V) until a CV time (1.5 hours) elapsed) and CC discharge (performing discharge at a constant current (0.2 A) until a lower limit voltage (2.5 V) was reached) were performed at 25°C, and the initial charge-discharge efficiency was calculated from a discharge capacity and a charge capacity in accordance with the following formula (2). The discharge-charge capacity was measured using VMP3 manufactured by BIOLOGIC Co., Ltd. An initial charge-discharge efficiency of 90% or more is considered "good".
Math. 2

$$\text{Initial charge-discharge efficiency (\%)}$$
$$= (\text{discharge capacity}/\text{charge capacity}) \times 100 \qquad (2)$$

(Charge-Discharge High-Temperature Cycle Characteristic)

A charge-discharge high-temperature cycle test was conducted by repeating CC-CV charge (performing charge at a constant current (1 A) until an upper limit voltage (4.2 V) was reached, followed by performing charge at a constant voltage (4.2 V) until a CV time (1.5 hours) elapsed) and CC discharge (performing discharge at a constant current (1 A) until a lower limit voltage (3.0 V) was reached) at 60°C. A charge-discharge high-temperature cycle characteristic of a battery was indexed by a capacity retention rate, i.e. a ratio of a discharge capacity in the 500th cycle to a discharge capacity in the first cycle. The discharge capacity was measured using VMP3 manufactured by BIOLOGIC Co., Ltd. A battery having a capacity retention rate of 70% or more is considered to have a good charge-discharge cycle characteristic.

(Example 1)

Preparation of a positive electrode will be described. 90% by mass of $LiCoO_2$, 5% by mass of acetylene black as a conductive auxiliary agent and 5% by mass of polyvinylidene fluoride as a binder were mixed, N-methylpyrrolidone was added to the mixture, and the mixture was further mixed to prepare a positive electrode slurry. The slurry was applied to an aluminum foil, as a current collector, having a thickness of 20 $\mu$m so that the thickness after a roll press treatment was 160 $\mu$m, drying was performed at 120°C for 5 minutes, and pressing step was carried out to obtain a positive electrode.

Preparation of a negative electrode will be described. 100 parts by mass of graphite, 1 part by mass of acetylene black, and 1.25 parts by mass of an emulsified polymer formed of a styrene-acrylic acid ester copolymer (manufactured by Showa Denko K.K., OLZ-6833-1, styrene/acrylic acid ester = 50/50 (mass ratio), non-volatile component content 40.0%, viscosity 20 mPa·s, pH 7.0, Tg (glass transition temperature) 15°C, MFT (minimum film formation temperature) 20°C, acid value 25 mgKOH/g), as a binder, and 50 parts by mass of a CMC solution formed by dissolving carboxymethyl cellulose in water (concentration of CMC: 2% by mass), as a thickener, were mixed, 0.04 mL of formic acid (85%) as a pH adjusting compound and 50 mL of water were further added, and the mixture was mixed to prepare a negative electrode slurry. pH of the resulting slurry was 3.2. The slurry was applied to a Cu foil, as a current collector, having a thickness of 10 $\mu$m so that the thickness after a roll press treatment was 120 $\mu$m, drying was performed at 100°C for 5 minutes, and pressing step was carried out to obtain a negative electrode.

Preparation of an electrolytic solution will be described. $LiPF_6$ was dissolved in a mixed solvent formed by mixing ethylene carbonate (EC) and diethyl carbonate (DEC) at a volume ratio of 30 : 70 so that the concentration of $LiPF_6$ was 1.0 mol/L, thereby preparing an electrolytic solution.

Preparation of a battery will be described. Conductive tabs were attached to a positive electrode and a negative electrode, and a laminate-type battery was obtained using these electrodes, a separator formed of a polyolefin-based porous film, and an electrolytic solution.

Evaluation results for the binder, the slurry and the lithium ion secondary battery prepared by use thereof are shown in Table 1.

(Example 2)

A slurry for lithium ion secondary battery electrodes was obtained in the same manner as in Example 1 except that the amount of formic acid as a pH adjusting compound was changed to adjust pH of the slurry to the value shown in Table 1. Evaluation results are shown in Table 1.

(Examples 3 and 4)

A slurry for lithium ion secondary battery electrodes was obtained in the same manner as in Example 1 except that in the negative electrode, the amount of the binder based on the amount of the active material was changed, and the amount of formic acid as a pH adjusting compound was changed to adjust pH of the slurry to the value shown in Table 1. Evaluation results are shown in Table 1.

(Example 5)

in the same manner as in Example 1 except that in the negative electrode, pH of the binder, the acid value of the binder and the amount of the binder based on the amount of the active material were changed, and the amount of formic acid as a pH adjusting compound was changed to adjust pH of the slurry to the value shown in Table 1. Evaluation results are shown in Table 1. Here, as an emulsified polymer formed of a styrene-acrylic acid ester copolymer, OLZ-6833-4 manufactured by Showa Denko K.K. (styrene/acrylic acid ester = 50/50 (mass ratio), non-volatile component content 40.0%, viscosity 15 mPa·s, pH 2.2, Tg 15°C, MFT 20°C, acid value 6 mgKOH/g) was used.

(Example 8)

A slurry for lithium ion secondary battery electrodes was obtained by performing the same operation as that in Example 1 except that in the negative electrode, pH of the binder and the amount of the binder based on the amount of the active material were changed, and formic acid as a pH adjusting compound was not used. Evaluation results are shown in Table 1. Here, as an emulsified polymer formed of a styrene-acrylic acid ester copolymer, OLZ-6833-5 manufactured by Showa Denko K.K. (styrene/acrylic acid ester = 50/50 (mass ratio), non-volatile component content 40.0%, viscosity 17 mPa·s, pH 2.2, Tg 15°C, MFT 20°C, acid value 25 mgKOH/g) was used.

(Example 9)

A slurry for lithium ion secondary battery electrodes was obtained by performing the same operation as that in Example 1 except that in the negative electrode, pH of the binder and the amount of the binder based on the amount of the active material were changed, and formic acid as a pH adjusting compound was not used. Evaluation results are shown in Table 1. Here, as an emulsified polymer formed of a styrene-acrylic acid ester copolymer, OLZ-6833-6 manufactured by Showa Denko K.K. (styrene/acrylic acid ester = 50/50 (mass ratio), non-volatile component content 40.0%, viscosity 19 mPa·s, pH 4.8, Tg 15°C, MFT 20°C, acid value 25 mgKOH/g) was used.

(Example 10)

A slurry for lithium ion secondary battery electrodes was obtained in the same manner as in Example 1 except that in the negative electrode, the composition of the binder and the amount of the binder based on the amount of the active material were changed, and the amount of formic acid as a pH adjusting compound was changed to adjust pH of the slurry to the value shown in Table 1. Evaluation results are shown in Table 1. Here, as an emulsified polymer formed of a methacrylic acid ester copolymer, TLX-1108-1 manufactured by Showa Denko K.K. (acrylic acid ester = 100 (mass ratio), non-volatile component content 40.0%, viscosity 60 mPa·s, pH 7.0, Tg 15°C, MFT 20°C, acid value 25 mgKOH/g) was used.

(Example 11)

A slurry for lithium ion secondary battery electrodes was obtained in the same manner as in Example 1 except that in the negative electrode, the composition of the binder and the amount of the binder based on the amount of the active material were changed, and the amount of formic acid as a pH adjusting compound was changed to adjust pH of the slurry to the value shown in Table 1. Evaluation results are shown in Table 1. The emulsified polymer formed of a styrene-butadiene copolymer, which was used here, had a non-volatile component content of 40.0%, a viscosity of 30 mPa·s, a pH of 7.7, a Tg of - 12°C, a MFT of 0°C and an acid value of 20 mgKOH/g.

(Comparative Examples 1 and 2)

A slurry for lithium ion secondary battery electrodes was obtained by performing the same operation as that in Example 1 except that in the negative electrode, the amount of the binder based on the amount of the active material was changed, and formic acid as a pH adjusting compound was not used. Evaluation results are shown in Table 1.

(Comparative Example 3)

A slurry for lithium ion secondary battery electrodes was obtained in the same manner as in Example 1 except that in the negative electrode, the amount of the binder based on the amount of the active material was changed, and the added amount of formic acid as a pH adjusting compound was changed to adjust pH of the slurry to the value shown in Table 1. Evaluation results are shown in Table 1.

(Comparative Example 4)

A slurry for lithium ion secondary battery electrodes was obtained by performing the same operation as that in Example 1 except for the composition of the binder and the amount of the binder based on the amount of the active material, and except that formic acid as a pH adjusting compound were not used, in the negative electrode. Evaluation results are shown in Table 1. The emulsified polymer formed

Table 1

| | Composition of binder | pH of binder | Acid value of binder | Amount of binder/ amount of active material in slurry | pH of slurry | pH adjusting compound | | Peel strength of current collector (mN/mm) | Initial charge-discharge efficiency (%) | Capacity retention rate (%) |
|---|---|---|---|---|---|---|---|---|---|---|
| | | | | | | Species | Added amount (mL) | | | |
| Example 1 | Styrene-acrylic acid ester copolymer | 7.0 | 25 | 0.5/100 | 3.2 | Formic acid | 0.04 | 100 | 95 | 78 |
| Example 2 | Styrene-acrylic acid ester copolymer | 7.0 | 25 | 0.5/100 | 5.8 | Formic acid | 0.01 | 80 | 93 | 75 |
| Example 3 | Styrene-acrylic acid ester copolymer | 7.0 | 25 | 2.5/100 | 5.5 | Formic acid | 0.09 | 180 | 91 | 75 |
| Example 4 | Styrene-acrylic acid ester copolymer | 7.0 | 25 | 3.8/100 | 5.5 | Formic acid | 0.22 | 200 | 90 | 75 |
| Example 5 | Styrene-acrylic acid ester copolymer (Crosslinker contained) | 7.0 | 25 | 2.5/100 | 4.0 | Formic acid | 0.15 | 185 | 92 | 75 |
| Example 6 | Styrene-acrylic acid ester copolymer | 7.0 | 6 | 0.5/100 | 4.5 | Formic acid | 0.02 | 80 | 98 | 78 |
| Example 7 | Styrene-acrylic acid ester copolymer | 2.2 | 6 | 1.0/100 | 3.9 | Formic acid | 0.02 | 175 | 96 | 78 |
| Example 8 | Styrene-acrylic acid ester copolymer | 2.2 | 25 | 1.0/100 | 3.2 | - | - | 150 | 96 | 78 |

(continued)

| | Composition of binder | pH of binder | Acid value of binder | Amount of binder/ amount of active material in slurry | pH of slurry | pH adjusting compound | | Peel strength of current collector (mN/mm) | Initial charge-discharge efficiency (%) | Capacity retention rate (%) |
|---|---|---|---|---|---|---|---|---|---|---|
| | | | | | | Species | Added amount (mL) | | | |
| Example 9 | Styrene-acrylic acid ester copolymer | 4.8 | 25 | 1.0/100 | 5.8 | - | - | 120 | 94 | 78 |
| Example 10 | Methacrylic acid ester copolymer | 7.0 | 25 | 2.5/100 | 3.9 | Formic acid | 0.15 | 120 | 95 | 75 |
| Example 11 | Styrene-butadiene copolymer | 7.7 | 20 | 2.5/100 | 3.2 | Formic acid | 0.15 | 75 | 90 | 78 |
| Comparative Example 1 | Styrene-acrylic acid ester copolymer | 7.0 | 25 | 1.0/100 | 7.0 | - | - | 10 | 70 | 10> |
| Comparative Example 2 | Styrene-acrylic acid ester copolymer | 7.0 | 25 | 4.0/100 | 7.5 | - | - | 50 | 80 | 50 |
| Comparative Example 3 | Styrene-acrylic acid ester copolymer | 7.0 | 25 | 1.0/100 | 2.0 | Formic acid | 0.12 | * | * | * |
| Comparative Example 4 | Styrene-butadiene copolymer | 7.7 | 20 | 4.0/100 | 8.5 | - | - | 45 | 75 | 50 |

* Measurement impossible

From comparison of Examples 1 to 11 with Comparative Examples 1 to 4, it is apparent that the conductive binder for lithium ion secondary battery electrodes according to the present invention is excellent in current collector peel strength, and by using the binder, a lithium ion secondary battery excellent in initial charge-discharge efficiency and charge-discharge high-temperature cycle characteristic is obtained.

**Claims**

1.  A slurry for lithium ion secondary battery electrodes, which is obtained using a binder for battery electrodes and an active material and has a pH of 3.0 to 6.0.

2.  The slurry for lithium ion secondary battery electrodes according to claim 1, wherein the slurry contains the binder for battery electrodes in an amount of 0.2 to 4.0% by mass based on the active material.

3.  The slurry for lithium ion secondary battery electrodes according to claim 1 or 2, wherein the binder for battery electrodes is obtained by polymerizing an ethylenically unsaturated monomer.

4.  The slurry for lithium ion secondary battery electrodes according to claim 3, wherein the binder for battery electrodes is obtained by emulsion-polymerizing the ethylenically unsaturated monomer.

5.  The slurry for lithium ion secondary battery electrodes according to claim 3 or 4, wherein the binder for battery electrodes is obtained by polymerizing styrene, an ethylenically unsaturated carboxylic acid ester and an ethylenically unsaturated carboxylic acid, and contains a crosslinker.

6.  The slurry for lithium ion secondary battery electrodes according to any one of claims 1 to 5, wherein the acid value of the binder for battery electrodes is 5.0 to 30.0 mgKOH/g.

7.  The slurry for lithium ion secondary battery electrodes according to any one of claims 1 to 6, wherein pH of the binder for battery electrodes in a state of being dissolved or dispersed in a liquid containing water is 2.0 to 5.0.

8.  The slurry for lithium ion secondary battery electrodes according to any one of claims 1 to 7, wherein the slurry further contains carboxymethyl cellulose.

9.  An electrode for lithium ion secondary batteries, which is obtained using the slurry for lithium ion secondary battery electrodes according to any one of claims 1 to 8.

10. A lithium ion secondary battery which is obtained using the electrode for lithium ion secondary batteries according to claim 9.

11. A method for producing an electrode for lithium ion secondary batteries, wherein pH of a slurry for lithium ion secondary battery electrodes, which is obtained using a binder for battery electrodes and an active material, is adjusted to 3.0 to 6.0, and an electrode for lithium ion secondary batteries is produced using the obtained slurry for lithium ion secondary battery electrodes.

12. A method for producing a lithium ion secondary battery, wherein the lithium ion secondary battery is produced using the electrode for lithium ion secondary batteries, which is obtained by the  method according to claim 11.

**INTERNATIONAL SEARCH REPORT**

| | International application No. |
|---|---|
| | PCT/JP2012/052156 |

**A. CLASSIFICATION OF SUBJECT MATTER**
*H01M4/139*(2010.01)i, *H01M4/13*(2010.01)i, *H01M4/62*(2006.01)i

According to International Patent Classification (IPC) or to both national classification and IPC

**B. FIELDS SEARCHED**

Minimum documentation searched (classification system followed by classification symbols)
H01M4/139, H01M4/13, H01M4/62

Documentation searched other than minimum documentation to the extent that such documents are included in the fields searched
Jitsuyo Shinan Koho          1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 11-149929 A  (Nippon Zeon Co., Ltd.),<br>02 June 1999 (02.06.1999),<br>claims 1, 2, 5 to 7; paragraphs [0008], [0010]<br>to [0013], [0016], [0021], [0032], [0038] to<br>[0043]; tables 1, 2<br>(Family: none) | 1-5,7-12 |
| X | JP 2000-11997 A  (Fuji Photo Film Co., Ltd.),<br>14 January 2000 (14.01.2000),<br>claims 1, 7; paragraphs [0028], [0040], [0059]<br>to [0064], [0069], [0070]<br>(Family: none) | 1-3,8-12 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 April, 2012 (21.04.12) | 01 May, 2012 (01.05.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/052156

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2004-349079 A  (Canon Inc.),<br>09 December 2004 (09.12.2004),<br>claims 1, 6, 10; paragraphs [0024], [0041],<br>[0045]<br>(Family: none) | 1-3,7-12 |
| A | JP 9-199135 A  (Nippon Zeon Co., Ltd.),<br>31 July 1997 (31.07.1997),<br>entire text<br>(Family: none) | 6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3966570 B

- JP 3562197 B